# EUROPEAN PATENT APPLICATION

(11) **EP 2 871 034 A1**
(43) Date of publication of application: **13.05.2015**
(21) Application number: 13192519.0
(22) Date of filing: 12.11.2013
(51) Int. Cl.: B28D 1/24, C03B 33/07, B65H 35/02

(54) **Cutting tool and cutting method for laminates.**

(71) Applicant: Nederlandse Organisatie voor toegepast- natuurwetenschappelijk onderzoek TNO, 2595 DA 's-Gravenhage (NL)
(72) Inventor: van Leuken, Linda Bianca, 2628 VK Delft (NL); Akkerman, Hylke Broer, 2628 VK Delft (NL); Ellis, Timothy Hendrik, 2628 VK Delft (NL); Unnikrishnan, Sandeep, 2628 VK Delft (NL); Li, Flora Man-Wah, 2628 VK Delft (NL)
(74) Representative: Jansen, Cornelis Marinus

(57) **Abstract**

The invention relates to a cutting tool and a method for cutting a laminate (100) comprising a brittle (101) and a ductile layer (102). The cutting tool comprises two cutting blades (2, 3) that arranged relative to each other such that cracks that arise in the brittle layer during cutting are prevented from propagating outside a well-defined cutting area. The tool and the method can advantageously applied for cutting barrier foils for plastic electronics.

## Description

The present invention relates to a cutting tool for cutting a laminate comprising a brittle and a ductile layer, the tool comprising a first cutting blade and a second cutting blade, the first cutting blade and the second cutting blade each having a cutting edge formed by a first surface and a second surface defining an acute angle, wherein the blades extend at one side of a plane through the two cutting edges and the first surface of the first cutting blade is facing the first surface of the second cutting blade. The invention also relates to the use of the cutting tool for cutting a laminate comprising a brittle and a ductile layer.

The invention further relates to a method of cutting a laminate comprising a brittle layer and a ductile layer, the method comprising the steps of providing the afore mentioned cutting tool, providing a laminate comprising a brittle layer and a ductile layer and cutting the laminate with the two cutting blades simultaneously after the two cutting edges have been brought into contact with the laminate such that a line along the laminate, perpendicular to the cutting edge through a contact point of the first cutting edge also passes through a contact point of the second cutting edge.

### State of the art

Laminates comprising a brittle layer and a ductile layer may comprise for example layers of thin ceramics and organic materials such as polymers and oligomers. Such laminates can be found in organic electronic devices such as organic light-emitting diodes (OLEDs) and organic photovoltaic cells (OPVs) or solar cells. Organic electronics are susceptible to degradation by the ambient, in particular by water and oxygen. For this reason such devices have to be protected from the ambient by barrier layers, which barrier layers are preferably thin to minimize light adsorption and to maintain mechanical flexibility. Most of the known high quality transparent thin film barriers against water and oxygen that are suitable for organic electronics, comprise at least one brittle layer. For optimal performance, including good optical properties the barrier layer may comprise multiple layers. Barrier films may be made by for example sheet-to-sheet or roll-to-roll production. Often such films have to be cut into smaller pieces for further use of the barrier.

Cutting tools and cutting methods are well known. Depending on the type of material and for example the thickness of the piece of material that has to be cut, a proper method or tool can be chosen. Tools such as scissors, knifes, saws, and lasers are used in daily life for cutting. Because the best method to cut a material may be different for different materials, the cutting of a laminate may be cumbersome. In particular when one of the composite materials is brittle and the other material is ductile.

European patent application EP0999188 discloses a method and an apparatus for cutting a laminate made of a brittle material and a plastic with a cutting tool. According to this method, first the viscosity of the plastic at the cutting region is lowered by heating. Subsequently a mechanical cutting tool is placed with a certain force on the plastic side of the laminate and the cutting tool is moved relative to the laminate in order to cut the laminate.

International application WO2008024432 discloses a method of separating a sheet of coated brittle material, for example a glass substrate coated with a polymeric layer. Here a laser is applied for cutting the laminate.

Japanese patent application JP2003-231026 discloses a tool unit and a cutting method capable of cutting a laminate of a board having a protective layer on a surface. This known tool comprises two blades for making two parallel grooves in the laminate, more in particular for cutting the protective layer while making the groove. After the protective layer between the grooves is removed, the board is cut between the two grooves by another cutting tool.

A disadvantage of the known tools and methods is that they need special precautions or high investments. Further many of the methods are laborious because they require preparatory work. Another disadvantage is that known apparatus and methods may damage the brittle layer, for example by inducing cracks. In particular when a mechanical cutting is applied, cracks appear in the brittle layer. Such cracks can propagate trough the layer away from the cut in an uncontrolled way resulting in large scale damage of the brittle layer.

### Summary of the invention

An objective of the present invention is to provide a tool for cutting a laminate of at least one brittle layer and at least one ductile layer that minimizes the damage to the laminate, in particular the brittle layer, and at the same time is simple in use and that does not require large financial investments.

The words brittle layer and ductile layer of the laminate are used here to distinguish two layers with different mechanical properties, more in particular to indicate that when the laminate is subject to a certain stress caused by an external tractive force, the brittle layer fractures while the ductile layer has a strain without rupture.

The above mentioned objective of the invention is obtained by a cutting tool for cutting a laminate comprising a brittle and a ductile layer, the tool comprising a first cutting blade and a second cutting blade, the first cutting blade and the second cutting blade each having a cutting edge formed by a first and a second surface defining an acute angle, wherein the blades extend at one side of a plane through the two cutting edges and the first surface of the first cutting blade is facing the first surface of the second cutting blade, characterised in that a distance between the two second surfaces and parallel to the plane through the two cutting edges is equal to or less than the distance between the cutting edges.

A cutting tool comprising two cutting blades in which a distance between the two second surfaces parallel to the plane through the cutting edges is equal to or less, so not larger, than the distance between the cutting edges has as an advantage that during cutting the distance between the second surfaces at the position where the cutting blades cut through the laminate does not exceed the distance of the two second surfaces at the starting of the cutting. The effect is that the cutting tool will not exert lateral forces on the laminate outside the area defined by the cutting edges at the start of the cutting. So, during cutting the cutting tool will only exert lateral forces on the laminate in the area between the two cutting blades. As a consequence, mainly or only the laminate, more in particular the brittle layer between the two blades, may be damaged. Because the damage is limited to this well-defined area of the laminate, one obtains damage free or minimal damaged laminate outside this area.

The cutting tool may comprise standard parts as will be discussed below and no special facilities are required. The cutting tool can advantageously be used for the cutting of a laminate comprising a brittle layer and a ductile layer.

In a preferred embodiment of the cutting tool the cutting edges of the blades are parallel. An advantage of parallel cutting edges is that the blades and the laminate can move relative to each other in a direction parallel to the laminate during cutting. The effect is that the cut, particularly its length, is not predetermined by the dimensions of the blades. Consequently, the tool can be used for making different cuttings without the need of replacing the cutting blades.

In another preferred embodiment the two cutting blades are rotatable endless cutting blades, for example cutting wheels which are rotatable around an axis perpendicular to the plane formed by their respective cutting edge. An advantage of such endless cutting blades is that they provide a continuous cutting edge. Similar to the embodiment discussed above, the cutting process does not require that the blades are periodically removed from the laminate as is the case when for example cutting stamps are applied. Another advantage of cutting wheels is that during cutting continuously a new part of the cutting edge is provided to the laminate resulting in less wear of the blade.

Another objective of the invention is to provide a method of cutting a laminate comprising a brittle layer and a ductile layer which is easy to apply, does not required large investments, and does hardly or not damage the laminate outside a well-defined cutting region.

This objective of the invention is obtained by a method of cutting a laminate comprising a brittle layer and a ductile layer, the method comprising the steps of
- providing a cutting tool comprising a first cutting blade and a second cutting blade, the first cutting blade and the second cutting blade each having a cutting edge formed by a first surface face and a second surface defining an acute angle, wherein the blades extend at one side of a plane through the two cutting edges and the first surface of the first cutting blade is facing the first surface of the second cutting blade,
- providing a laminate comprising a brittle layer and a ductile layer,
- cutting the laminate with the two cutting blades simultaneously after the two cutting edges have been brought into contact with the laminate such that a line along the laminate, perpendicular to the cutting edge through a contact point of
the first cutting edge also passes through a contact point of the cutting edge, characterised in that during cutting the angle between a trajectory of a point on the first cutting edge and a trajectory of a point on the second cutting edge is equal to or larger than the angle between a line through said point of the first cutting edge parallel to the second surface of the first cutting blade and a line through said point of the second cutting edge parallel to the second surface of the second cutting blade.

An advantage of having an angle between the trajectories of the cutting edges that is equal to or larger, so not smaller than the angle between lines parallel to the second surfaces of the cutting edges is that no lateral forces are exerted on the laminate outside an area between the two blades of the cutting tool. The effect is that the damage to the brittle layer is mainly limited to said area so that other parts of the laminate remain undamaged or nearly undamaged. Because of the simple cutting tool, the method can easily be implemented without high investments.

### Brief description of the figures

- Figure 1: schematically shows a cross section of an embodiment of the cutting tool;
- Figure 2A: schematically shows an embodiment of the cutting tool including a laminate carrier;
- Figure 2B: schematically shows a side view of the embodiment of figure 2A in which the cutting blades are tilted;
- Figure 3A: schematically shows a cross section of an embodiment of the cutting tool comprising cutting wheels;
- Figure 3B: schematically shows a cross section of another embodiment of the cutting tool comprising cutting wheels;
- Figure 3C: schematically shows a cross section of still another embodiment of the cutting tool comprising cutting wheels;
- Figure 4A: schematically shows a cross section of an embodiment of the cutting tool comprising an additional set of cutting blades;
- Figure 4B: schematically shows a top view of a scissors type of embodiment of the cutting tool shown in figure 4A;
- Figure 4C: schematically shows a top view of a punch type of embodiment of the cutting tool shown in figure 4A;
- Figure 5: schematically shows an embodiment comprising two pairs of scissors;
- Figure 6: schematically shows a cross sectional view of an embodiment in which two sets of cutting blades are mechanically fixed to each other;
- Figure 7: schematically shows a cross sectional view of an embodiment in which the distance between cutting blades is adjustable;
- Figure 8A: cross section of cutting blades illustrating an embodiment of the cutting method;
- Figure 8B: illustration of a preferred embodiment of the cutting method applying the cutting tool;
- Figure 9: illustration of an embodiment of the cutting method.

### Detailed description the invention

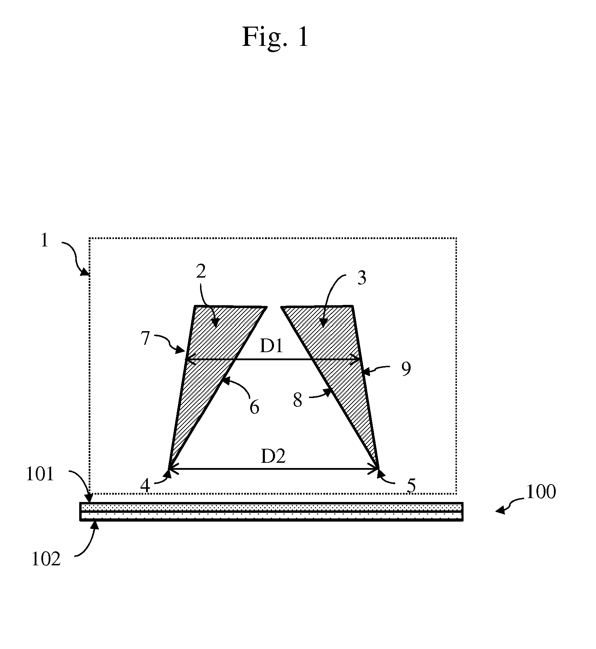

Figure 1 schematically shows a cross section of an embodiment of the cutting tool (1), including a laminate (100) of a brittle layer (101) and a ductile layer (102). The cutting tool comprises two cutting blades (2,3), which blades may be made out of any suitable material including stainless steel and ceramics. The blades have a wedge shape formed by a first surface (6,8) and a second surface (7,9) defining an acute angle, viz. an angle that is smaller than 90 degrees, preferably much smaller than 90 degrees, for example 30 degrees or less. The first and second surfaces of each cutting blade thus provide a cutting edge (4,5) for cutting the laminate. The two surfaces facing each other, viz. the first surface (6) of the first cutting blade and first surface (8) of the second cutting blade, are inclined relative to each other such that the distance between the two surfaces decreases starting from a maximum at the cutting edges to a smaller distance further away from the cutting edges. In the embodiment shown in figure 1, the cross sections of the first and second surfaces perpendicular to the plane through the cutting edges are straight lines. However, in similar embodiments of the cutting tool, the shape of the cutting blades may be such that that one or more of the cross sections are curved provided that the distance (D1) between the two second surfaces (7,9) and parallel to the plane through the two cutting edges does not exceed the distance (D2) between the cutting edges.

A laminate can be cut by moving the cutting tool towards the laminate or by moving the laminate towards the cutting tool. When describing different embodiments of the cutting tool and cutting method, a movement of the cutting blades towards the laminated also includes the equivalent movement of the laminate towards the blades.

To allow cutting, the cutting blades and the laminate are brought into contact with each other. Cutting starts when due to forces acting on the blades or the laminate, the cutting edges enter the laminate from a first surface. In figure 1, this first surface is the free surface of the brittle layer (101). Usually the cutting will be completed when the cutting edges reach the opposite second surface of the laminate. In figure 1, the second surface is the free surface of the ductile layer (102). However, the word cutting is also used if the cutting edges do not completely sever the laminate but leave a thin connection part, for example a thin plastic connecting part that will be broken later. For further handling, such a more or less connected laminate might be preferred before breaking down the laminate in separate small pieces.

An example of an embodiment of the cutting tool where the cross sections of the second surfaces (7,9) are straight lines, as shown in figure 1, is a tool where the second surfaces are flat surfaces. In such an embodiment the second surface (7) of the first cutting blade and the second surface (9) of the second cutting blade do not incline towards each other in the direction of the cutting edge. This means that the surfaces (7) and (9) may be parallel to each other or may incline towards each other when looking in a direction away from the cutting edges as shown in figure 1. Due to this geometry where the distance (D1) between the two second surfaces is equal to or smaller than the distance (D2) between the cutting edges of the two cutting blades, there will be no lateral forces on the brittle layer in the direction away from the cutting tool. Possible damage to the brittle layer will be mainly limited to the area that is defined and confined by the two cutting blades.

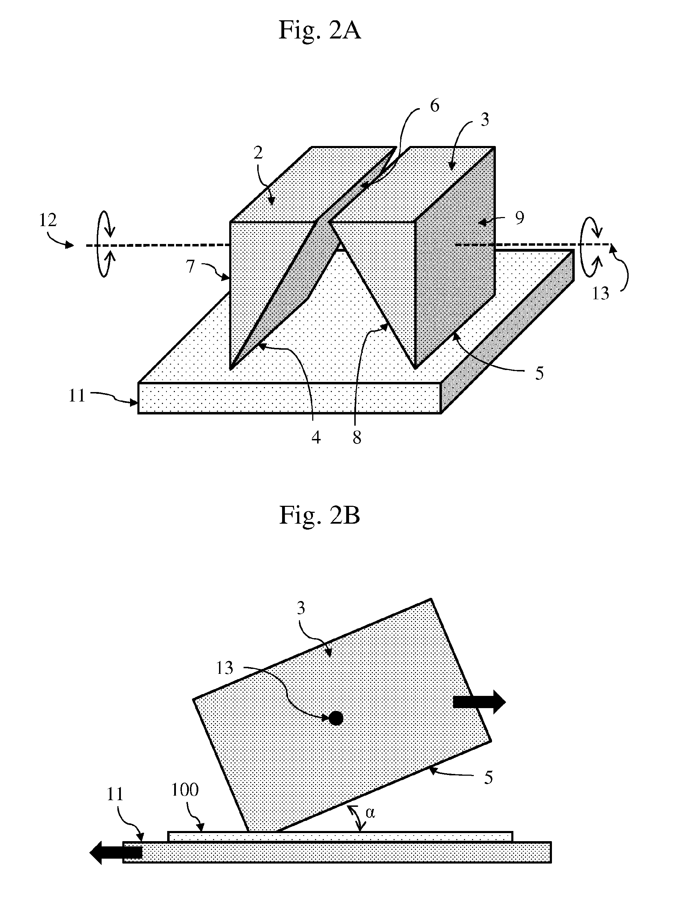

In figure 2A an embodiment of the cutting tool is shown in which the surfaces that are directed away from each other, viz. the second surfaces (7,9) of the first cutting blade (2) and the second cutting blade (3), are parallel flat surfaces. Also the two first surfaces (6,8) are flat surfaces in this embodiment. Such an embodiment may be preferred because of easy manufacturing. This embodiment allows also modification into other embodiments as will be discussed below. The cutting tool comprises a carrier (11) for carrying the laminate that has to be cut. The carrier can be any type of carrier suitable for providing the laminate to the cutting tool. Carriers known in the art are for example flat tables that can be translated laterally in one or more directions or rotatable drums. The cutting blades, either individually or jointly, and the carrier are movable relative to each other.

The blades may be tilted or can pivot around an axis (12,13) perpendicular to the second surface (7,9). In the embodiment shown in figure 2A, such tilting will allow other use of the cutting tool than punching. This will be explained with reference to the side view of the cutting tool shown in figure 2B. In this side view only one of the cutting blades can be seen. It will be appreciated that where in the discussion reference is made to one of the blades, a similar discussion holds for the other blade. When the cutting edge and the laminate make an acute angle then a continuous cutting is possible by moving the cutting blade (3) or the laminate (100) or both in a direction indicated by the arrows. In the embodiment of figure 2B the cutting blade (3) is titled with an angle α relative to the embodiment shown in figure 2A. Such a tilting may be obtained by an arrangement that allows pivoting of the blade around an axis (13) or by an arrangement in which the blade is fixed at the tilted position relative to the carrier (11) that carries the laminate (100) that has to be cut. In an arrangement where the cutting blades can pivot, the cutting blade can be arranged at different cutting angles α. Such an arrangement may be advantageous when different laminates that require different cutting angles have to be cut with the tool. This makes the cutting tool more flexible in use. Preferably, the tilt angle of the two blades is the same. The tilt angle α is less than 90 degrees and may be as small as 0 degrees as is shown in figure 2A. It is preferred that the tilt angle is between 5 degrees and 45 degrees for optimal cutting.

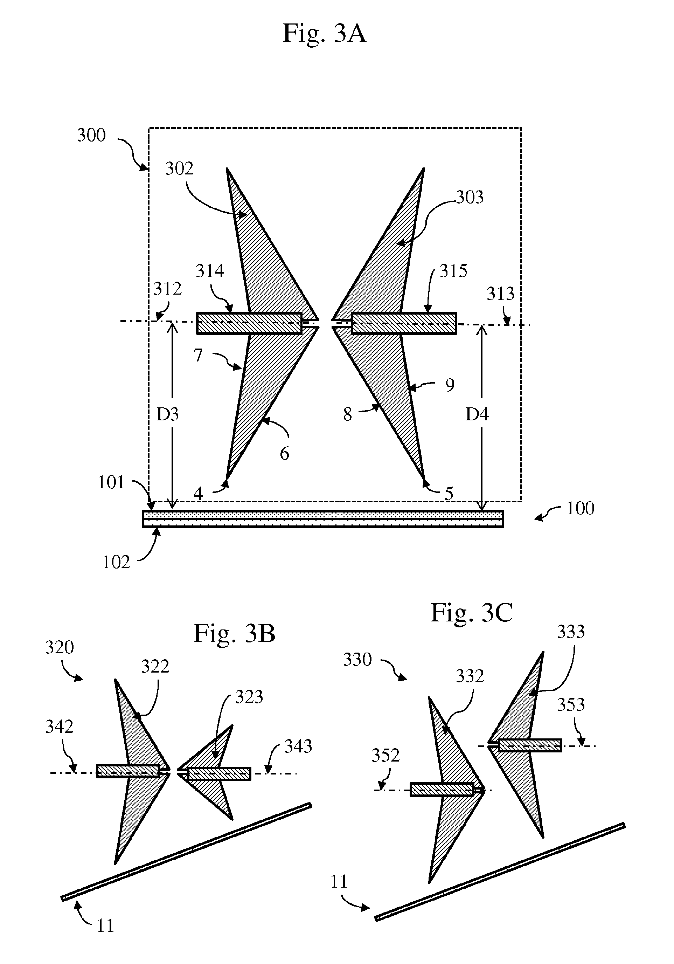

Figure 3 schematically shows a cross section of an embodiment (300) of the cutting tool wherein the cutting edges (4,5) of the cutting blades (302,303) are endless. A preferred geometry of such an endless cutting edge is the rim of a wheel, preferably a round wheel because then the distance (D3,D4) from the axis (312,313) to the laminate is constant during rotation of the cutting blades and thus during cutting. The cutting edge (4) of the first cutting blade (302) is formed by the first surface (6) and the second surface (7). Similarly, the first (8) and second (9) surface of the second blade (303) form a second cutting edge (5). To allow efficient rotation around the axis that is perpendicular to the plane formed by the respective endless cutting edge, each wheel may comprise an axle (314,315) and bearings. In the figures 3B and 3C , two other embodiments (320,330) of the cutting tool with endless cutting edges are shown. In all embodiments shown in the figures 3A, 3B and 3C, each cutting wheel has its own axle that allows independent rotation of the wheels. Independent axes of rotation may be preferred for embodiments in which the axles of the two wheels and consequently the axes of rotation (352,353) are not in line with each other as in embodiment (330) shown in figure 3C. This embodiment of the cutting tool may be applied when the rotation axes of the cutting wheels are not parallel to the plane of the laminate during cutting. In the later situation also an embodiment (320) comprising cutting wheels (322,323) with different radius may be applied, as shown in figure 3B. When applying on of the two embodiments (320, 330) shown in the figures 3B and 3C, the axes of rotation (342,343,352,353) will not be parallel to the laminate that is cut. In the embodiments (300,320) shown in the figures 3A and 3B where the axis of rotation of the wheels are in line, the two cutting wheels may be mounted on a single axle.

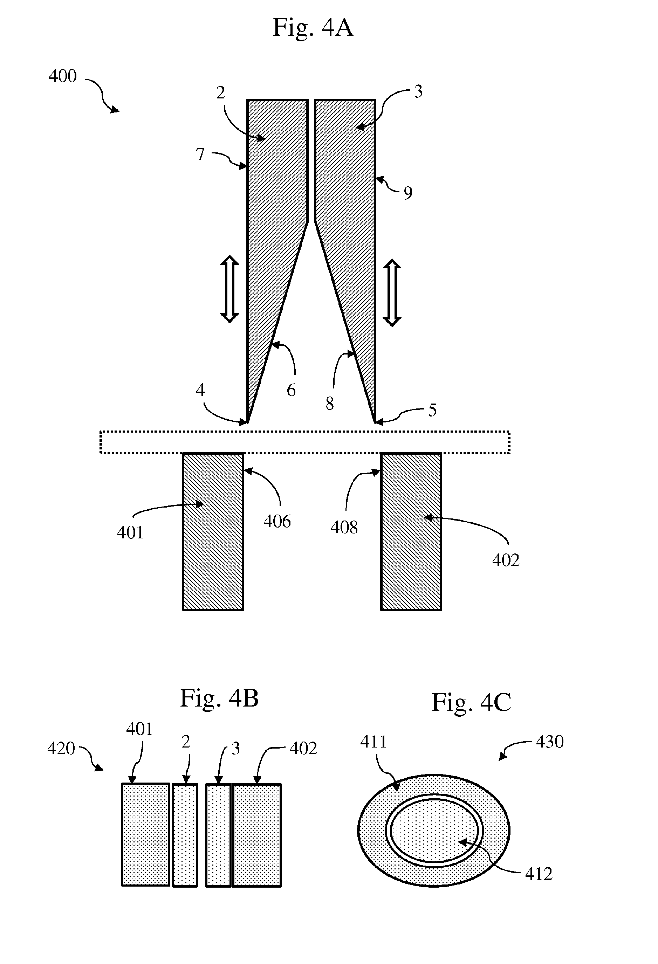

A cross sectional view of another embodiment of the cutting tool is shown in figure 4A. Similar to other embodiments of the cutting tool, this embodiment comprises two cutting blades (2,3) having two surfaces forming a cutting edge. A first surface (6) of the first cutting blade facing the first surface (8) of the second cutting blade and a second surface (7) of the first cutting blade that is directed away from the second surface (9) of the second cutting blade. In this embodiment, the second surfaces, viz. the surfaces (7,9) that are oriented away from each other, are parallel. Again, the cutting edge (4,5) of each blade is formed by its first surface and second surface. This set of two cutting blades will further also be referred to as the upper set of blades. Similarly, each blade individually will also be referred to as an upper blade. It is noted however, that the word upper is used here only in relation to the orientation of the cutting tool as shown in figure 4A.

In addition to the two upper cutting blades, this embodiment comprises two additional cutting blades, viz. a third blade (401) and a fourth blade (402). Each of these cutting blades has a gliding surface (406,408) of which the function will be explained below. The two additional blades are arranged relative to each other such that the two gliding surfaces are facing each other. The gliding surface of each additional blade is parallel to the second surface of the corresponding upper blade. So, the gliding surface (406) of the third blade is parallel to the second surface (7) of the first blade and the gliding surface (408) of the fourth blade is parallel to the second surface (9) of the second blade. To allow cutting of a laminate as will be explained below, the laminate has to be positioned between the two blades (2,401) at the left hand side and the between the two blades (3,402) at the right hand side, so between the upper set of blades and the lower, additional set of blades.

The gap between the two additional blades, viz. the gap defined by the two gliding surfaces is chosen such that the first and second cutting blade can enter the gap to perform cutting of the laminate. The first cutting blade and the third cutting blade are movable relative to each other in a direction parallel to the second surface of the first cutting blade in order to perform cutting by a gliding movement of the second surface (7) of the first blade along the gliding surface (406) of the third blade. This means that during cutting, the second surface of the first cutting blade and the gliding surface of the third blade are moving in a plane. This plane may be perpendicular to the laminate as shown in figure 4A. This plane may, however, also be tilted relative to the laminate, resulting in an oblique cut, viz. a cut that is not perpendicular to the surface of the laminate. Similarly the second surface of the second cutting blade and the gliding surface of the fourth cutting blade are moving in a plane during cutting.

To allow placing of a laminate in order to perform the cutting, the upper set of cutting blades and the additional set can be moved relative to each other to create a gap between the two sets.

The embodiment of the cutting tool of which a schematic cross sectional view is shown in figure 4A can be brought into practise in different ways. This will be illustrated by describing the cutting of a laminate that is placed between the upper and the additional set of blades and which laminate is supported by the additional blades. This is the situation as shown in figure 4A. First, the movement of the upper blades relative to the laminate may be such that the cutting edges (4,5) as a whole cut through the laminate resulting in a kind of punching. An example of such a tool (430) is shown in top view in figure 4C. For a punching type of cutting tool it may be preferred that the two upper cutting blades and the two additional blades are mechanically fixed together to form a single upper cutting body (412) and a single additional cutting body (411).

Secondly, the embodiment of which a cross sectional view is shown in figure 4A can be brought into practice such that the blades glide gradually through the laminate, similar to using a pair of scissors. A top view of a scissor type of cutting tool (420) is shown in figure 4B. A first pair of scissors is formed by the first cutting blade (2) and the third blade (401). A second pair of scissors is formed by the second cutting blade (3) and the fourth blade (402). Preferably the two upper blades (2,3) are mechanically fixed to each other to allow a synchronised movement of the blades. Also the two additional blades may be mechanically fixed to each other.

Thirdly, the embodiment of figure 4A can be brought into practice such that the upper blades are cutting wheels of which the second surfaces (7,9) are parallel. During cutting, the wheels may be partly entering the gap between the additional blades (401,402) to allow a cleavage of the laminate.

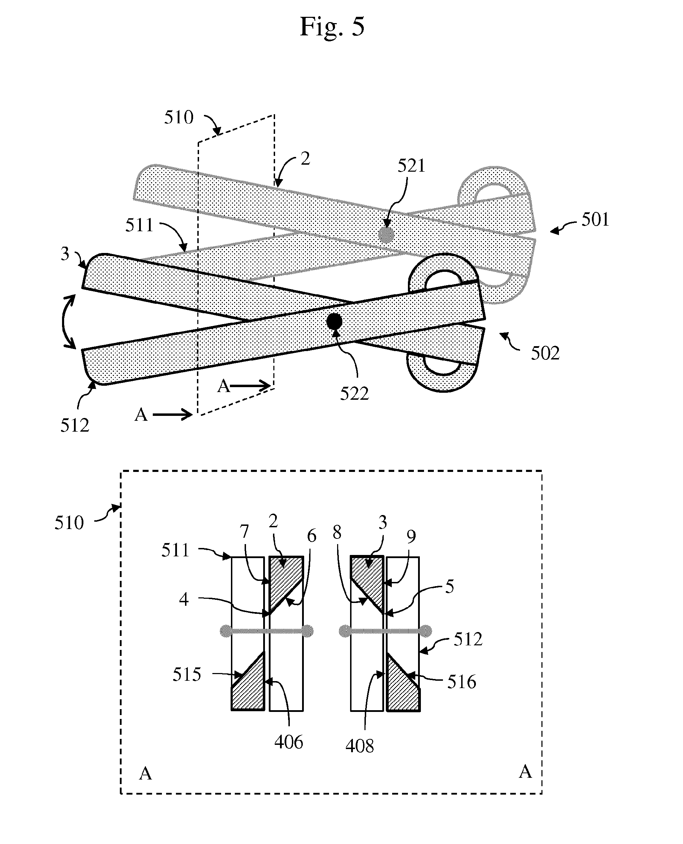

The scissor type of embodiment will be discussed in more detail with reference to figure 5. It is understood that this embodiment may be used manually but that the tool may also be mechanised so that the cutting can be performed by a machine. Of course the handles may be omitted and replaced by a drive mechanism when the cutting tool is mechanised. In figure 5, an overview of the tool comprising two pairs of scissors (501,502) is shown and also a cross section by plane AA. The two pairs of scissors are each other's mirror image as can best be seen in the cross sectional view (510). The first pair of scissors (501) comprises a first cutting blade (2) and a cutting blade that is referred to as the third cutting blade (511) of the tool. The first and third cutting blade can pivot around an axis (521) to provide a cutting movement. Similarly, the second cutting blade (3) and the fourth cutting blade (512) of the tool that are forming the second pair of scissors (502) can pivot around an axis (522). Preferably, the two axes (521,522) are in line such that the two scissors can be fixed on a single axle. Each of the upper cutting blades (2,3) has a cutting edge (4,5) that is formed by two surfaces of the blade defining an acute angle as discussed above. In this embodiment also the two additional blades (511,512) have a cutting edge. So these additional blades do not have a blunt end as the embodiment of figure 4A, but have a sharp end. The cutting edge of the third blade (511) is formed by an acute angle between the gliding surface (406) and another surface (515) of the blade. Similarly, the cutting edge of the fourth blade (512) is formed by an acute angle between the gliding surface (408) and another surface (516) of the blade.

The two pairs of scissors are arranged relative to each other such that the two parallel gliding surfaces (406,408) are facing each other. These gliding surfaces of the two outer cutting blades (511,512) of the cutting tool, leave sufficient space for receiving the two inner cutting blades (2,3) of the cutting tool. The inner blades are arranged in parallel such that the surfaces (7,9) of the upper blades that are directed away from each other. The gliding surfaces of the two pairs of scissors each are parallel to the corresponding gliding surface. So, the gliding surface (406) of the third cutting blade is parallel to the second surface (7) of the first cutting blade. The gliding surface (408) of the fourth cutting blade is parallel to the second surface (9) of the second cutting blade. The two cutting blades of each pair of scissors are movable relative to each other by pivoting around an axis (521,522). This pivoting results in a movement of the two blades of a pair of scissors relative to each other such that the upper blade (2,3) glides along the gliding surface (406,408) of the lower blade to perform the cutting.

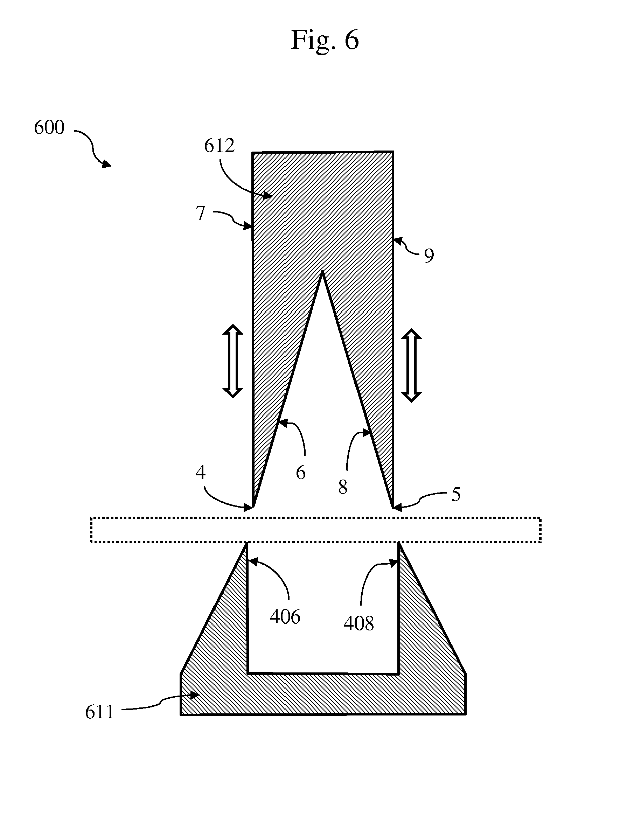

The first and second cutting blade of the cutting tool may be mechanically fixed to each other as is shown in figure 6. Fixing the two blades may be such that the two blades actually form a single cutting piece (612) as the cross sectional view of the cutting tool in figure 6 shows. In this embodiment (600) of the cutting tool, the first cutting blade and the second cutting blade are made out of one piece (612) of material, for example steel or ceramic. Consequently, the two cutting edges (4,5) are mechanically fixed. For improved cutting, the cutting edges (4,5) may be made out of different material than the other part of the cutting blades. The outer surfaces of the cutting piece, viz. the second surfaces (7,9) of the cutting blades may be parallel as shown in figure 6, however these surfaces may also incline towards each other provided that the inclination is in the direction away from the cutting edges so that the distance between the second surfaces is not larger than the distance between the cutting edges. The single cutting piece can also replace the upper part of the cutting tool shown in figure 4A. Persons skilled in the art will appreciate that also in the embodiment of figure 5, the two inner cutting blades may be replaced by a single cutting piece comprising two cutting edges.

The single cutting piece (612) shown in figure 6 can be combined with a second cutting piece (611) comprising two cutting edges to obtain a cutting tool (600) that is similar to two mechanically fixed pairs of scissors. Two cutting pieces each having two cutting edges may also be applied for punching holes in a laminate by a cutting tool (430) of which a top view is shown in figure 4C. In both a punch type of cutting tool and in a scissors type of cutting tool, the gliding surfaces (406, 408) of the second cutting piece are parallel to the outer surfaces (7,9) of the first cutting piece. In a punch type of cutting tool the two outer surfaces may be joined to form a single endless surface and the two cutting edges may be joint to form a single endless cutting edge.

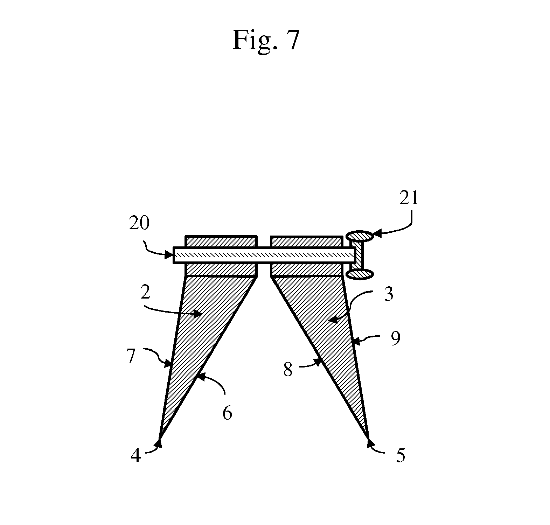

The cutting edges of the cutting tool may be arranged at a fixed distance from each other as shown in figure 6. However, for a more general application of the cutting tool allowing the cutting of a large variety of laminates, it may be preferred that the distance between the two cutting edges is adjustable. Adjusting the distance between the cutting edges may be done manually by a screw connecting the cutting blades as is shown schematically in figure 7. In this embodiment two cutting blades (2,3) are displaceable relative to each other in a direction perpendicular to the cutting edges (4,5) in order to vary the distance between the cutting edges. In the embodiment shown in figure 7, each of the cutting blades has a screw thread that is adapted for receiving a screw (20). The screw may be turned manually by for example a wing nut (21) fixed to the screw. The direction of rotation of the screw thread of the first cutting blade is opposite to the direction of rotation of the crew of the second blade. Depending on the direction in which the screw is rotated, the two blades will either move towards each other or away from each other. The screw may also be turned by a motor, for example a stepping motor for accurate positioning of the two blades. In an embodiment comprising two sets of cutting blades, such as the embodiment shown in figure 4A, it is preferred that the movement of the two sets of cutting blades is synchronised to maintain good cutting property of each set.

Where in this description conditions are given for the shape of the cutting blades, these conditions refer to the part of the cutting blades that are intended to cut through the laminate. Parts of the cutting blades that will not come in contact with the laminate need not to satisfy such conditions.

A further aspect of the invention is a cutting method for cutting a laminate comprising a brittle layer and a ductile layer. The invention is based on the insight of the inventors that during cutting of such laminates, lateral forces induce cracks in the brittle layer and that by avoiding that lateral forces are exerted outside a predefined cutting area, the damage to the laminate can be limited. The method will be described here in more detail.

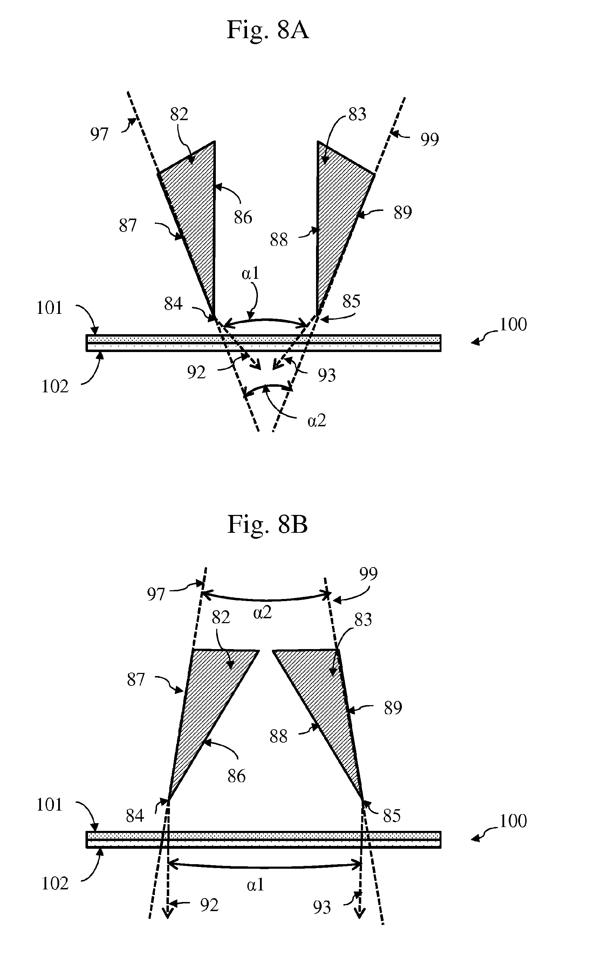

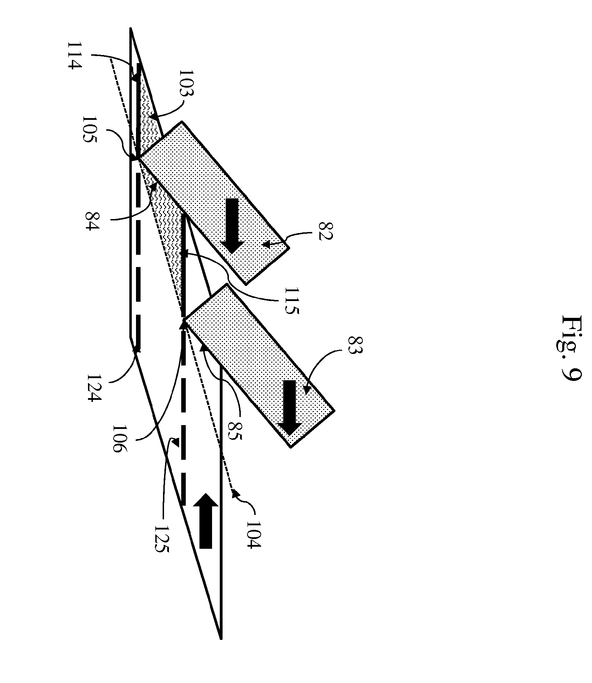

Reference is made to the figures 8A, 8B and 9 for the illustration of certain aspects of the method. Cutting a laminate comprising a brittle and a ductile layer requires the step of providing the laminate. For the application in polymeric electronics, the brittle layer of the laminate may for example be a layer made out of a metal nitride, a metal carbide, or a metal oxynitride. This includes layers made out of SiN (silicon nitride) or SiO2 (silicon oxide). The ductile layer can be made out of several types of materials. It may be a plastic foil made out of a thermoplastic polymer, for example PET (Polyethylene terephthalate), PI (Polyimide), PEEK (Polyether ether ketone), PEN (Polyethylene naphthalate), PC (Polycarbonate), HDPE (High Density Polyethylene), or PP (Polypropylene).

The laminate may be a laminate of only two layers, a brittle layer and a ductile layer but it may also be a laminate of more than two layers, for example three or four layers or multilayers comprising multiple stacks of layers. More in particular the laminate may comprise one or more functional layers such as a layer of an organic coating for planarization (OCP). An example is a laminate of a PEN substrate and an OCP sandwiched between two SiN layers.

To allow cutting, the cutting edges have to be brought into contact with the laminate because the method is a mechanical way of cutting. Bringing the laminate and the cutting edges in contact with each other can be done by hand, for example by placing the cutting blades on the laminate. The cutting edges and the laminate can also be brought into contact by mechanical means. A laminated sheet may for example be transported to a position close to the blades of the cutting tool by a conveyer. Subsequently the cutting blades may be moved by a motor towards the laminate. In roll-to-roll equipment the laminate that has to be cut may be wound around a drum. The actual cutting or cleavage of the laminate occurs when a force is exerted on the laminate or the cutting blades which force is large enough to allow the cutting edges penetrating the laminate. The contact points of the cutting edges and the laminate have to be chosen such that no or no significant damage is caused to the laminate outside the cutting area during the subsequent cutting.

For a further elucidation of the geometry, reference is made to figure 9. The cutting area (103) is the area of the laminate that is situated between the cuts of the two cutting blades (82,83), viz. between the cut (114) of the first cutting edge (84) and the cut (115) of the second cutting edge (85). To prevent the propagation of damage outside this area, the actual cutting has to take place such that the positions at the laminate where the actual cleavage by each of the two blades takes place (105,106) are on a line (104) perpendicular to the cutting edges. Therefore, also the contact between the cutting edges and the laminate just before starting the actual cutting must satisfy the condition that a line (104) along the laminate, perpendicular to one of the cutting edges also passes through a contact point of the other cutting edge. A crack initiated at one of the cutting edges will propagate along the laminate in the direction of the other cutting edge. In case that there is no cut of the corresponding cutting blade when the crack initiated at the other cutting blade arrives at the position of the intended cut than the crack will propagate further along the laminate and thus damaging of the laminate outside the cutting area occurs. This geometric condition not only holds for the initial contact that is the starting of the actual cutting, but this condition must also be satisfied during cutting. This requires that the two cutting blades perform the cutting simultaneously.

After the cutting edges and the laminate are brought into contact as described above, a force is exerted on the laminate or on the cutting blades such that the cutting edges penetrate the laminate. Usually it will be preferred that the cutting blades cut the laminate completely. When cutting the laminate completely, the cutting edges will cleave the laminate from the upper side, viz. the side of the laminate that is directed towards the cutting blades and at which the cutting edge and laminate are brought into contact, to the opposite side of the laminate.

As soon as the cutting edges penetrate the laminate, the actual cutting starts by moving the cuttings blades and the laminate relative to each other. In a preferred embodiment of the method, the actual cutting starts by moving the cuttings blades and the laminate relative to each other in a propagation direction as indicated by the arrows in figure 9. The propagation direction is a direction parallel to the laminate. The propagation direction may be defined by a straight cutting line as indicated by the dashed lines (124,125) in figure 9. The propagation direction may, however, vary during the cutting, resulting in curved cuttings. When the propagation direction is curved, the speed of the two blades relative to the substrate will be different. This may require that in certain embodiments the cutting blades can move independently from each other, or at least at different speed. It is appreciated, however, that curved cuttings can also be obtained by cutting blades that are mechanically fixed or form a single piece as discussed before.

To apply the method, a suitable cutting tool has to be provided. Such a cutting tool of which embodiments are shown in the figures 8A and 8B, comprises two blades (82, 83). Each of these two blades has a cutting edge (84,85) formed by the a first (86,88) and a second surface (87,89) defining an acute angle. The blades are arranged to each other at one side of the laminate to be cut such that one of the surfaces of each blade is facing a surface of the other blade. These are the inner surfaces (86,88) in the figures 8A and 8B. Figure 8A shows a cross section of two cutting blades and arrows indicating the direction of moving. In this embodiment of the cutting method, the laminate is cut at an angle. Figure 8B shows the cutting tool as shown in figure 1 and arrows indicating the cutting movement and lines to elucidate the cutting method. During cutting the cutting edge follows a trajectory that is at least partly predefined by the construction of the cutting tool. Actually, each point on the cutting edge has its own trajectory depending on its position on the cutting edge and the movement of the cutting blade. In the figures 8A and 8B a trajectory (92) of a point on the first cutting edge and a trajectory (93) of a point on the second cutting edge are shown. The angle between the two trajectories may be zero degrees in case that the trajectories are parallel or the angle may be larger. Non-parallel trajectories require special cutting equipment as will be explained below. In addition to the trajectories two construction lines are shown. The two construction lines are parallel to the outwards directed surfaces of the cutting blades. Referring to figures 8A and 8B these are the surfaces that are directed outwards, viz. the surface of the first blade that is directed to the left and the surface of the second blade that is directed to the right. One of the lines (97) is parallel to the outwards directed surface (97) of the first cutting blade and another line (99) is parallel to the outwards directed surface (99) of the second cutting blade. During cutting the angle (α1) between the trajectories is not smaller, viz. equal to or larger than the angle (α2) between the construction lines. In case that the cross section of the cutting blades as shown in the figures 8A and 8B are not straight lines, for example if the cross sections of the outer surfaces (87,89) are curved then the construction line is a tangent line at the point of the surface contacting the laminate.

Although the method can be brought into practice by using different types of cutting equipment satisfying the conditions as discussed above, a preferred method is using the cutting tool as describe before. In such an embodiment, the second surface, viz. the outwards directed surface, of each blade is arranged relative to the second surface of the other blade such that the distance between the second surfaces is not larger than the distance between the cutting edges. In embodiments where the surfaces are flat surfaces, these two outer surfaces do not incline towards each other when looking in the direction of the cutting edge. So, the surfaces are parallel or incline towards each other in the direction away from the cutting edge as shown in figure 8B.

The method can also be applied for punching. During punching, the cutting edges of the two blades are in full contact with the laminate as is, for example shown in figures 2A and 6. This in contrast to other ways of cutting where the final cut may be much larger, more in particular much longer, than the cutting edge. These other ways of cutting will be elucidated further with reference to figure 9A. A straight line (104) through any point of the cutting edge (84) of the first cutting edge and perpendicular to this cutting edge will pass through a point (106) where the cutting edge of the second cutting blade (83) makes contact with the laminate. Accordingly the cut of the second cutting edge prevents the extension of the damage outside the cutting area between the two cutting edges as is also the case during punching.

In a particular embodiment of the method, a cutting equipment is applied in which the cutting blades are arranged such that during cutting the blades move towards each other. This will further be discussed with reference to figure 8A. During cutting the cutting blades (82,83) perform a movement as indicated by the arrows (92,93). The direction of this movement is chosen such that the outwards directed surfaces (87,89) do not exert a lateral force on the laminate in a direction away from the cutting. Applying this embodiment results in a cut or cleavage that is not perpendicular to the surface of the laminate. It requires that the two cutting blades can make a specific movement relative to each other.

The cutting method is in particular suited for cutting laminates in a direction from the brittle layer towards the ductile layer. This means that in a geometry as shown in the figure 8A, 8B and 9, the brittle layer is on top of the ductile layer. Such a geometry of cutting by using the cutting tool is also shown in figure 1. The application of the method is not limited to laminates having only one brittle layer and one ductile layer. The method comprises also cutting laminates having more layers, for example three or four layers or stacks of laminates.

The invention also relates to the use of the cutting tool for cutting a laminate comprising a brittle layer and a ductile layer. Whereas the cutting tool may be used for cutting other laminates, foils, and sheets of material, it is in particular suited for cutting a laminate comprising a brittle layer and a ductile layer because it solves a problem that typically occurs when cutting such laminates.

## Claims

1. Cutting tool for cutting a laminate (100) comprising a brittle (101) and a ductile layer (102), the tool comprising a first cutting blade (2) and a second cutting blade (3), the first cutting blade and the second cutting blade each having a cutting edge (4,5) formed by a first surface (6,8) and a second surface (7,9) defining an acute angle, wherein the blades extend at one side of a plane through the two cutting edges and the first surface (6) of the first cutting blade is facing the first surface (8) of the second cutting blade
**characterised in that**
a distance (D1) between the two second surfaces (7,9) and parallel to the plane through the two cutting edges is equal to or less than the distance (D2) between the cutting edges.

2. Cutting tool according to claim 1, wherein the cutting edges (4,5) are parallel.

3. Cutting tool according to claim 1 or 2 , wherein the second surface (7) of the first cutting blade and the second surface (9) of the second cutting blade are parallel.

4. Cutting tool according to claim 2, wherein the cutting edges are lying in a flat plane.

5. Cutting tool according to any of the claims 1 to 3, wherein the cutting edge of the first cutting blade and the cutting edge of second cutting blade are endless cutting edges and wherein the first cutting blade and the second cutting blade are rotatable around an axis perpendicular to the plane formed by their respective endless cutting edges.

6. Cutting tool according to any of the claims 1 to 4, comprising a third (401) and a fourth (402) cutting blade, each of these cutting blades having a gliding surface (406,408), wherein
- the gliding surface (406) of the third cutting blade is facing the gliding surface (408) of the fourth cutting blade, which gliding surfaces are defining a gap for receiving the first (2) and second (3) cutting blade, and
- the gliding surface of the third cutting blade is parallel to the second surface (7) of the first cutting blade, and
- the gliding surface of the fourth cutting blade is parallel to the second surface (9) of the second cutting blade, and wherein
- the first and the third cutting blade are movable relative to each other in a direction parallel to the second surface of the first cutting blade to perform a cutting by a gliding movement of the second surface (7) of the first blade along the gliding surface (406) of the third blade, and
- the second and the fourth cutting blade are movable relative to each other in a direction parallel to the second surface of the second cutting blade to perform a cutting by a gliding movement of the second surface (9) of the second blade along the gliding surface (406) of the fourth blade.

7. Cutting tool according to claim 6, wherein the third and fourth cutting blade have a cutting edge formed by an acute angle between the gliding surface (406,408) and a cutting surface (515,516).

8. Cutting tool according to claim 6 or 7, wherein the first cutting blade and the third cutting blade can pivot around a first common axis (521) and wherein the second cutting blade and the fourth cutting blade can pivot around a second common axis (522).

9. Cutting tool according to any of the preceding claims, wherein the first cutting blade and the second cutting blade are mechanically fixed to provide a synchronous movement of the cutting edges relative to the laminate during use.

10. Cutting tool according to claims 6 to 9, wherein the third cutting blade and the fourth cutting blade are mechanically fixed to provide a synchronous movement of the third and fourth cutting blade during use.

11. Cutting tool according to any of the claims 1 to 4, wherein the distance between the first blade (2) and the second blade (3) is adjustable to vary the distance between the cutting edges.

12. Method of cutting a laminate comprising a brittle layer and a ductile layer, the method comprising the steps of
- providing a cutting tool comprising a first blade (82) and a second blade (83), the first blade and the second blade each having a cutting edge (84,85) formed by a first surface (86,88) and a second surface (87,89) making an acute angle, wherein the blades extend at one side of a plane through the two cutting edges and the first surface (86) of the first cutting blade is facing the first surface (88) of the second cutting blade,
- providing a laminate (100) comprising a brittle layer (101) and a ductile layer (102),
- cutting the laminate with the two cutting blades simultaneously after the two cutting edges have been brought into contact with the laminate such that a line (104) along the laminate, perpendicular to the cutting edge through a contact point (105) of the first cutting edge also passes through a contact point (106) of the second cutting edge,
**characterised in that**
during cutting the angle (α1) between a trajectory (92) of a point on the first cutting edge and a trajectory (93) of a point on the second cutting edge is equal to or larger than the angle (α2) between a line (97) through said point of the first cutting edge parallel to the second surface (87) of the first cutting blade and a line (99) through said point of the second cutting edge parallel to the second surface (89) of the second cutting blade.

13. Method according to claim 12, wherein the direction of cutting is from the brittle layer towards the ductile layer.

14. Method according to claim 12 or 13 wherein during cutting the trajectory (92) of a point on the first cutting edge is parallel to the trajectory (93) of a point on the second cutting edge.

15. Use of the cutting tool according to claim 1 for cutting a laminate comprising a brittle and a ductile layer.
